(19) Europäisches Patentamt
European Patent Office
Office européen des brevets

(11) EP 1 651 487 B1

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **04766348.9**

(22) Anmeldetag: **28.07.2004**

(51) Int Cl.:
***B60T 8/36*** *(2006.01)* ***B60T 8/50*** *(2006.01)*

(86) Internationale Anmeldenummer:
**PCT/EP2004/051639**

(87) Internationale Veröffentlichungsnummer:
**WO 2005/009815 (03.02.2005 Gazette 2005/05)**

(54) **VERFAHREN ZUM ERMITTELN DES ANSTEUERSTROMS EINES STELLGERÄTS**

METHOD FOR DETERMINING THE DRIVE CURRENT FOR AN ACTUATOR

PROCEDE POUR DETERMINER LE COURANT D'ATTAQUE D'UN APPAREIL DE REGLAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.07.2003 DE 10335586**
**26.11.2003 DE 10355836**
**13.05.2004 DE 102004024058**

(43) Veröffentlichungstag der Anmeldung:
**03.05.2006 Patentblatt 2006/18**

(60) Teilanmeldung:
**07019587.0**

(73) Patentinhaber: **Continental Teves AG & Co. oHG**
**60488 Frankfurt (DE)**

(72) Erfinder:
- **ENGELMANN, Mario**
  **61449 Steinbach/Ts. (DE)**
- **FEY, Wolfgang**
  **65527 Niedernhausen (DE)**
- **HEINZ, Micha**
  **64293 Darmstadt (DE)**
- **JÖCKEL, Wolfgang**
  **63179 Obertshausen (DE)**
- **SCHMITZ, Axel**
  **65795 Hattersheim (DE)**

(74) Vertreter: **Brand, Markus**
**c/o Continental Teves AG & Co. oHG,**
**Guerickestrasse 7**
**60488 Frankfurt am Main (DE)**

(56) Entgegenhaltungen:
**WO-A-01/98124**
**WO-A-96/28325**
**DE-A- 10 053 606**
**DE-A- 10 053 607**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 651 487 B1

## Beschreibung

Die Erfindung betrifft unter anderem ein Verfahren zur Berechnung eines Ansteuerstroms mindestens eines elektrisch ansteuerbaren Stellgeräts, beispielsweise eines Magnetventils, zum Regeln des differenzdruckabhängigen Durchflusses G($\Delta P$,I,KG) eines Fluids gemäß Oberbegriff von Anspruch 1. Weiterhin betrifft die Erfindung ein Verfahren zur Kalibrierung oder mechanischen Justage eines Stellgeräts.

Es ist bekannt, in ABS-Steuergeräten für Kraftfahrzeugbremssysteme, aber auch in sogenannten Fahrdynamikreglern mit zusätzlichen Funktionen wie ESP etc., elektromagnetisch ansteuerbare analogisierte Ventile für eine verbesserte Regelung bzw. zur Geräuschminderung einzusetzen.

In neueren Generationen von Hydraulikregelvorrichtungen werden sogenannte analogisierte Schaltventile eingesetzt. Ein analogisiertes Schaltventil ist ein stromangesteuertes Magnetventil, welches an sich zum vollständigen Öffnen oder Schließen ausgelegt ist, jedoch durch gezielte Stromeinstellung so betrieben wird, dass dieses analoge Regeleigenschaften besitzt.

In der Schrift DE 100 53 606 A1 wird ein Verfahren zum Regeln eines Magnetventils offenbart, bei welchem die Ventilansteuerzeit aus der vorgegebenen Ventilöffnungszeit und dem vorgegebenen Druck über dem Ventil bestimmt wird.

Die Schrift DE 100 53 607 A1 offenbart ein Verfahren zum Bestimmen der Temperatur von Ventilen im Bremskreis eines Fahrzeugs.

Ein Verfahren zur Erkennung des Schaltpunktes eines analog einsetzbaren Schaltventils, insbesondere zur Bestimmung der Druckverhältnisse aus dem Stromverlauf des Ventilansteuerstromes geht aus der EP 0 813 481 B1 (P 7565) hervor.

Im Prinzip lässt sich demzufolge der Druckgradient oder Durchfluss G eines entsprechenden analogisierten Schaltventils in Abhängigkeit vom Differenzdruck durch Variation des Stroms durch die Magnetspule des Ventils einstellen. Der Volumenstrom Q ist im Bereich der Regelung allerdings schwierig einzustellen und hängt unter anderem vom Differenzdruck $\Delta p$ und vom Strom I durch die Magnetspule des Ventils ab. Allerdings lässt sich diese Abhängigkeit nicht ohne weiteres in einem einmal festgelegten Kennfeld ablegen, da bereits geringe fertigungsbedingte Toleranzen der Ventilbauteile einen großen Einfluss auf den funktionalen Zusammenhang zwischen Durchfluss und Ansteuerstrom haben. Daher ist es erforderlich, während der Fertigung der Ventile für jedes Ventil individuell ein Kennfeld zu bestimmen und dieses in einem Speicher der Elektronik des Steuergeräts abzulegen. Zur Erstellung der individuellen Kennfelder ist jedoch ein aufwändiges Messverfahren mit definierten Druckbeaufschlagungen der Steuergeräte beim Zulieferer oder am Bandende beim Kraftfahrzeughersteller nötig. Die durch das aufwändige Messverfahren ermittelten Kennfelder können dann, wie dies beispielsweise in der WO 01/98124 A1 (P 9896) beschrieben ist, zur Einstellung des gewünschten Druckgradienten herangezogen werden.

Die unveröffentlichte DE 103 21 783.5 (P 10697) beschreibt ein Lernverfahren für Ventilkennlinien von Analogventilen bzw. analogisierten Schaltventilen. Nach diesem Verfahren wird eine Kalibrierung der Hydraulikventile während des Betriebs der ABS-Bremsvorrichtung vorgenommen, in dem eine Ansteuerkennlinie oder entsprechende Korrekturgrößen zur Korrektur einer vorhandenen Ansteuerkennlinie durch ein Lernverfahren ermittelt werden. Für dieses Lernverfahren ist charakteristisch, dass sich dieses über mehrere Zyklen der Blockierschutzregelung hinweg erstreckt. In jedem geeigneten Zyklus werden die benötigten Druckaufbauzeiten gesammelt und es wird mit Hilfe der aus dem aktuellen Zyklus ermittelten Parameter nach einer rekursiven Formel eine Erhöhung der Kennlinie bewirkt. Dieses Verfahren dient zur Verbesserung einer vorhandenen Ansteuerkennlinie und setzt daher eine bereits vorhandene Kennlinie voraus.

Die vorstehend beschriebenen Verfahren zum Ermitteln der Kennfelder oder Kennlinien sind somit entweder nicht genaugenug oder sie können nur durch ein aufwändiges Messverfahren ermittelt werden, welches beim Lieferant oder am Bandende durchgeführt werden muss. Nur auf diese Weise können die den Druckverlauf beeinflussenden, fertigungsabhängigen individuellen Kenngrößen $KG_{ind}$ eines Ventils, die sich z.B. aus den gemessenen Kennfeldern oder Kennlinien gewinnen lassen, ermitteln.

Ziel der Erfindung ist es nun, ein Verfahren zum Ermitteln von Kenngrößen, Ventilkennlinien oder Ventilkennfeldern anzugeben, welches zu einer genaueren Ansteuerung der weiter oben beschrieben Magnetventile führt, ohne dass bei der Fertigung oder am Bandende eine aufwändige individuelle Ventilkalibrierung durchgeführt werden muss.

Diese Aufgabe wird erfindungsgemäß gelöst durch das Verfahren gemäß Anspruch 1.

Unter dem Begriff Stellgeräte werden Ventile und Schieber zum Einstellen eines Fluiddurchflusses verstanden. Bevorzugt handelt es sich bei dem eingesetzten Stellgerät um ein Ventil. Als bevorzugtes Fluid kommt neben Luft auch eine geeignete Hydraulikflüssigkeit in Betracht, welche bei der Anwendung einer Bremse insbesondere eine handelsübliche Bremsflüssigkeit ist.

Das Stellgerät besitzt vorzugsweise eine vollständig geöffnete und eine vollständig geschlossene Position. Je nach Art des Stellgeräts, stromlos offen (SO-V) oder stromlos geschlossen (SG-V), nimmt das Ventil eine dieser Positionen, hervorgerufen durch ein Rückstellelement ein. Ein geeignetes Rückstellelement kann bevorzugt eine Feder sein, welche eine definierte Kraft/Weg-Kennlinie aufweist, die sich insbesondere durch eine Geradengleichung annähern lässt.

Das Verfahren nach der Erfindung wird bevorzugt in einer elektrohydraulischen Vorrichtung zur Bremsenregelung für Kraftfahrzeuge eingesetzt.

Das Verfahren nach der Erfindung bezieht sich bevorzugt auch auf ein Verfahren zur Einstellung oder Regelung eines Druckgradienten eines Stellgeräts.

Gemäß dem Verfahren der Erfindung werden die erforderlichen Kennlinien oder Parameter bzw. Kenngrößen zur Kalibrierung ohne die Verwendung von Druckbeaufschlagungen des Stellgeräts ermittelt. Eine gesonderte Druckbeaufschlagung während der Ermittlung der Kennlinien oder Parameter mittels einer pneumatischen oder hydraulischen Messanordnung zum Ermitteln der Kennlinien kann daher entfallen. Die Erfindung betrifft also insbesondere ein Verfahren zur Ermittlung von besonders genauen Stellgerätekennlinien oder Parametern während des Betriebs eines Kraftfahrzeugs, welches mit einer Bremsanlage ausgestattet ist, die insbesondere Regelventile zur Regelung des Bremsdrucks aufweist.

Das Verfahren nach der Erfindung führt unter anderem zu dem Vorteil, dass ein hergestelltes Stellgerät bzw. eine ganze Hydraulikeinheit nicht, wie dies bisher erforderlich war, in einem Prüfstand individuell unter Verwendung von definierten Drücken ausgemessen werden muss. Es genügt nach dem Verfahren der Erfindung, dass eine elektronische Steuerung, die an das Stellgerät bzw. an die Hydraulikeinheit angeschlossen ist, die elektromechanischen und magnetischen Eigenschaften des Stellgeräts ausmisst. Diese Eigenschaften sind insbesondere im wesentlichen genau die individuellen magnetischen und mechanischen Kenngrößen $KG_{ind}$ des Stellgeräts, welche im wesentlichen für die fertigungsbedingte Streuung in der Kennlinie verantwortlich sind. Die weniger fertigungsbedingt streuenden Kenngrößen des Stellgeräts lassen sich durch weitere, allgemeine Kenngrößen $KG_{all}$ einmal für die Baureihe festlegen und im elektronischen Steuergerät dauerhaft speichern. Aus den Kenngrößen kann dann die Stellgerätekennlinie und damit der erforderliche differenzdruckabhängige Ansteuerstrom für das Stellgerät berechnet werden.

Das Verfahren nach der Erfindung bietet weiterhin den Vorteil, dass das Verfahren, was bevorzugt nach der Erfindung auch getan wird, beliebig oft, insbesondere in regelmäßigen Abständen auch nach dem Einbau in ein Fahrzeug selbstständig durchgeführt werden kann. Hierdurch ist es möglich, dass sich das System in regelmäßigen Abständen neu kalibriert. Auf diese Weise ist es somit weiterhin erstmals möglich, etwaige Veränderungen der Anordnung auf Grund von äußeren Einflüssen, wie etwa Verschleiß, die erst längere Zeit nach der Herstellung des Stellgeräts auftreten, zu berücksichtigen. Die Kennlinien können also ohne eine Messapparatur durch den Regler, auch zum Zeitpunkt nach dem Einbau in ein Fahrzeug, selbsttätig bestimmt werden. Hierdurch kann vorteilhaft ein zusätzlicher Datenübertragungsschritt von einer sonst erforderlichen Messanordnung zur Ermittlung der Kennlinien in das Steuergerät entfallen.

Wie dies generell der Fall ist, muss zum Einstellen eines bestimmten Durchflusses G mit den ermittelten Kennlinien dem elektronischen Regler zusätzlich die Druckdifferenz $\Delta P$ am Ventil bekannt sein. Diese wird nach dem Verfahren bevorzugt auf an sich bekannte Weise modellbasiert näherungsweise berechnet oder sensorisch gemessen. Ist beispielsweise lediglich ein Drucksensor im Bereich des Tandemhauptpzylinders vorhanden, wird der Differenzdruck insbesondere aus dem zeitlichen Verlauf der druckbeeinflussenden Größen, wie Druckaufbauzeiten etc., bestimmt. Besonders bei diesem integrierenden Verfahren zur Bestimmung des Druckgradienten ist die Genauigkeit des Durchflusses von großer Bedeutung.

Wie bereits allgemeiner ausgeführt, hat es sich gezeigt, dass die Ursachen für die verbleibenden Streuungen der Kennlinien bzw. insbesondere deren Gradienten überwiegend von den Toleranzen der Mechanik, z.B. der schwankenden Federkraft $F_{Feder}$, und des magnetischen Feldlinienkreises (z.B. magnetische Widerstände der Luftspalte, etc.) des Stellgeräts herrühren.

Nach einer bevorzugten Ausführungsform des Verfahrens wird der magnetische Gesamtwiderstand des magnetischen Kreises gemessen. Generell gilt, dass an Stelle des magnetischen Widerstands auch die Induktivität L des entsprechenden Magnetkreises, bezogen auf die Windungszahl N der Spule, als äquivalente physikalische Größe in entsprechender Weise zur Durchführung des erfindungsgemäßen Verfahrens herangezogen werden kann.

Hierzu kann das Ventil mit einer oder mehreren zusätzlichen Messelementen, insbesondere Messspulen versehen sein.

Die Messspule kann elektrisch unabhängig von der Ansteuerspule sein. Es ist aber auch möglich, die Messspule elektrisch in Reihe mit der Ansteuerspule zu schalten. Hierdurch ergibt sich der Vorteil, dass lediglich drei Ansteuerleitungen nach außen geführt werden müssen.

Der Durchfluss G des Stellgerätes bzw. Ventils wird im Prinzip neben dem Differenzdruck und den geometrischen Strömungseigenschaften durch die Kraft bestimmt, welche auf den Stößel des betreffenden Stellgeräts (Stößelkraft) wirkt. Die Erfindung betrifft daher bevorzugt auch ein Verfahren zum Einstellen oder Regeln der Stößelkraft eines Stellgeräts.

Mit Hilfe eines nach einer anderen Ausführungsform der Erfindung im Bereich des Stellgeräts angeordneten Messelements ist es möglich, innere physikalische Parameter des Stellgeräts zu ermitteln und diese bei der Berechnung der Kennlinien zu berücksichtigen. Auf diese Weise kann auf ganz besonders präzise Weise über die zuvor beschriebene Regelung die Stößelstellung, die Stößelkraft oder der Durchfluss des Stellgeräts eingestellt oder geregelt werden.

Vorzugsweise können als Messelement außer der Spule prinzipiell alle magnetfeldabhängigen Sensoren (z.B. Hallsensoren, MR-Sensoren) verwendet werden, wenn sie zur Erfassung des wirksamen magnetischen Flusses geeignet sind. Der Einsatz einer Spule erscheint jedoch auf Grund der Möglichkeit einer kostengünstigen Fertigung besonders zweckmäßig.

Gemäß dem Verfahren der Erfindung wird bevorzugt in einer Kalibrierroutine die Federkraft, und wenn erforderlich der maximale Stößelhub, ermittelt. Diese Größen gehen dann mit in die Kraftberechnung ein.

Eine Besonderheit des Verfahrens nach der Erfindung besteht unter anderem darin, dass bevorzugt eine Messung des Magnetflusses durchgeführt und insbesondere nach diesem auch geregelt wird. Dies ist deshalb sinnvoll, weil die magnetische Kraft direkt abhängig vom magnetischen Fluss ist. Hier besteht ein wesentlicher Unterschied zu den bisher bekannten Verfahren, bei denen der Strom durch die Spule die bestimmende Größe ist.

Durch das beschriebene Verfahren wird vorzugsweise der maximale Stößelhub innerhalb des Stellgeräts und insbesondere die Federkraft ausgemessen. Durch zusätzliche Berücksichtigung des bekannten Druckgradienten kann dann die Kraft-Weg-Kennlinie des Stellgeräts sehr genau definiert werden, so dass der Durchfluss des Ventils mit besonders hoher Genauigkeit geregelt oder gesteuert werden kann.

Neben dem obigen betrifft die Erfindung weiterhin die Verwendung des erfindungsgemäßen Verfahrens zur Kontrolle oder Verbesserung der Fertigungsqualität eines Stellgeräts, insbesondere Ventils, in dem der Stößelhub und/oder die Federkraft während oder unmittelbar nach der Fertigung des Stellgeräts oder Ventils bzw. der Fertigung des hydraulischen Ventilblocks gemessen wird.

In einer weiteren bevorzugten Ausführungsform des im vorstehenden Absatz beschriebenen Verfahrens wird neben der weiter oben beschriebenen elektrischen Kalibrierung eine zusätzliche mechanische Justage des Stellgeräts während der Fertigung durchgeführt.

Dabei wird insbesondere beim Zusammenbau des Stellgeräts der Restluftspalt und der Stößelhub allein über die Betrachtung einer elektrischen Kenngröße des Stellgeräts eingestellt. Dies erfolgt ganz besonders bevorzugt dadurch, dass der magnetische Widerstand bei geschlossenem Stellgerät und der magnetische Widerstand bei geöffnetem Stellgerät gemessen wird.

An dieses Justageverfahren kann sich zu einem späteren Zeitpunkt bevorzugt zusätzlich das weiter oben beschriebene elektrische, drucklose Kalibrierverfahren anschließen. Bei der Durchführung des drucklosen Kalibrierverfahrens mit vorjustiertem Stellgerät muss durch das Verfahren im wesentlichen lediglich eine Toleranz in der Charakteristik der Rückstellfeder ausgeglichen werden.

Eine weitere Verbesserung des erfindungsgemäßen Verfahren ergibt sich bevorzugt dadurch, dass eine nach der erfindungsgemäßen Kalibrierung zusätzlich das weiter oben erwähnte Lernverfahren, wie es aus der DE 103 21 783.5 bekannt ist, durchgeführt wird.

Gemäß einer weiteren Ausführungsform des Verfahrens der Erfindung wird die Messung des Integrals am Spulenabgriff bzw. am Abgriff der Messspule mittels einer besonders einfach aufgebauten sogenannten elektronischen Rechteckformerschaltung durchgeführt. Es handelt sich dabei um ein Verfahren zum Ermitteln des magnetischen Flusses in mindestens einem über eine Treiberstufe elektrisch ansteuerbaren induktiven Stellgerät oder ganz allgemein Aktor-Bauelement durch Auswertung oder Einstellen der Stellgerät oder Aktor-Bauelement induzierten Spannung $U_{ind}$ mittels einer elektronischen Messeinrichtung, wobei die am induktiven Stellgerät oder Aktor-Bauelement anliegende Spannung aktiv durch die Messeinrichtung oder die elektronische Ansteuerung des induktiven Stellgerätes oder Aktor-Bauelements auf einem im wesentlichen konstanten Wert gehalten wird und die Zeit $t_1$ bestimmt wird, in der der durch das induktive Bauelement und die Messeinrichtung fließende Strom beim Einschalten oder Abschalten eine Spannung induziert.

In diesem Verfahren wird vorzugsweise die Abschaltzeit $t_c$, welche die Zeit zwischen dem Anschalten $t_0$ und der Zeit $t_1$ angibt, oder die Anschaltzeit des Aktorbauelements bestimmt.

Im Zusammenhang mit dem vorstehend beschriebenen Verfahren stehend betrifft die Erfindung noch eine elektronische Schaltungsanordnung zum Ermitteln des magnetischen Flusses bzw. der Induktivität eines induktiven Stellgerätes oder Aktor-Bauelements, umfassend eine Messeinrichtung mit Signaleingang und Signalausgang, wobei der Signaleingang elektrisch mit dem induktiven Bauelement verbunden ist und der Ausgang ein elektrisches Signal bereitstellt, welches eine Information über die Zeit enthält, die benötigt wurde, um die in dem induktiven Stellgerät oder Aktor-Bauelement gespeicherte Energie bei konstanter Spannung vollständig abzuführen oder den Strom im induktiven Stellgerätes oder Aktor-Bauelement vollständig auf den gewünschten Maximalstrom zu bringen.

Bevorzugt ist in der vorstehend beschriebenen Schaltungsanordnung der Signalausgang der Messeinrichtung als Istwert einer Regelschaltung zugeführt, deren Regelgröße der Strom durch das induktive Bauelement ist.

Das zuvor beschriebene Messverfahren und die Schaltungsanordnung wird zweckmäßigerweise zur Messung des integrierten Spannungssignals am Abgriff der Spule des Stellgeräts in dem zu Beginn beschriebenen Kalibrierverfahren an Stelle der Messeinrichtung eingesetzt.

Weitere bevorzugte Ausführungsformen ergeben sich aus den Unteransprüchen und der nachfolgenden Beschreibung von Ausführungsbeispielen an Hand von Figuren.

Es zeigen

Fig. 1 eine schematische Darstellung eines Regelkreises zum Regeln des Magnetflusses ohne zusätzliche Messspule,

Fig. 2 ein Ausführungsbeispiel einer magnetischen Flussregelung mit Messspule,

Fig. 3 ein stromlos offenes Analog/Digitalventil (SO-AD-Ventil) im Querschnitt,

Fig. 4 eine Ausführung mit Messspule ähnlich Fig. 2 mit dem Unterschied, dass als Regelgröße der magnetische Widerstand verwendet wird,

Fig. 5 ein Beispiel zur Bestimmung des magnetischen Widerstands bei geschlossenem Ventil,

Fig. 6 ein Beispiel für ein Verfahren zur Bestimmung des magnetischen Widerstands in einem EBS-Steuergerät,

Fig. 7 ein Beispiel für ein Verfahren zur Bestimmung der Federkraft eines Magnetventils,

Fig. 8 eine schematische Darstellung eines Verfahrens zur Bestimmung einer Ventilöffnungsstromkennlinie,

Fig. 9 eine Anordnung eines Regelkreises zur Ventilkalibrierung mit einem Rechteckformer.

Die nachfolgend beschriebenen Beispiele werden in einer elektrohydraulischen Regelvorrichtung für Personenkraftfahrzeugbremsen angewendet. Üblicherweise umfassen entsprechende Regelvorrichtungen (EBS-Steuergerät) ein Reglergehäuse (ECU) mit einem Mikrocontrollersystem 18, wie in Figuren 1, 2 und 4 schematisch dargestellt, und einen mit dem Regler verbundenen Ventilblock (HCU) mit den zur Steuerung des Hydraulikflusses eingesetzten elektromagnetisch betriebenen Ventilen 1. Der Regler umfasst außerdem eine Ansteuerschaltung (Stromquelle 3), mit der der Ventilstrom I individuell für jedes Ventil pulsweitenmoduliert eingestellt und auch gemessen werden kann. Im hier nicht näher dargestellten Kraftfahrzeugsteuergerät sind für jedes Ventil entsprechende Ventiltreiber vorgesehen, die mittels individuell ansteuerbarer PWM-Treiberstufen realisiert sind. An den Klemmen der Spule ist eine Messeinrichtung 4 vorgesehen, mit der die Induktionsspannung $U_{ind}$ gemessen werden kann. Am Ausgang von Messeinrichtung 4 steht ein Signal $\Phi_{ist}$ zur Verfügung, welches proportional zum Integral über $U_{ind}(t)$ ist.

Für die weitere Erläuterung der Erfindung erscheint es sinnvoll, die folgenden mathematischen Zusammenhänge anzugeben:

Die magnetische Kraft ergibt sich aus

$$F_{magn} = \frac{1}{2 * \mu_0 * A_{Anker}} * \Phi^2 ,$$

wobei $\mu_0$ die Permeabilitätskonstante (Luft), $A_{Anker}$ die Ankerfläche und $\Phi$ der magnetische Fluss ist.

Der magnetischer Fluss errechnet sich nach der Formel

$$\Phi = \frac{\Theta}{RM_{gesamt}} \qquad \text{mit} \quad \Theta = I * N ,$$

wobei I der Spulenstrom, N die Windungszahl der Ventilspule und $RM_{gesamt}$ der gesamte magnetische Widerstand des Magnetkreises im Ventil ist.

Weiterhin gilt:

$$U_{ind} = -N * \frac{d\Phi}{dt} \quad \text{sowie} \quad \Phi = -\frac{1}{N}\int_0^t U_{ind}\, dt \; .$$

Beim Abschalten des Ventilstroms I in Fig. 1 ergibt sich eine Änderung des magnetischen Flusses $\Phi$ in Ventil 1, welche durch die mit Ventil 1 verbundene Messeinrichtung 4 über Induktionsspannung $U_{ind}$ gemessen werden kann. Messeinrichtung 4 bildet das zeitliche Integral über den Verlauf der induzierten Spannung $U_{ind}$ und führt das integrierte Signal dem Mikrocontroller 18 zu. Dieses Signal ist proportional zum durch die Ventilspule hervorgerufenen magnetischen Fluss $\Phi$. Eine alternative Messeinrichtung zur Bestimmung dieses Integrals ist weiter unten im Zusammenhang mit Fig. 9 beschrieben.

Durch die Rückführung des Signals der Messeinrichtung in den Mikrocontroller lässt sich demzufolge eine Flusssteuerung oder Flussregelung realisieren. Der durch Ventilspule 1 strömende Ventilstrom bildet darin die eigentliche Stellgröße der Regelung.

Durch die Steuerung bzw. Regelung des magnetischen Flusses werden die vorhandenen individuellen Fertigungstoleranzen (Federkonstante und Luftspalte im Magnetkreis) des Ventils ausgeglichen. Der einzustellende Druckgradient G wird durch die ABS/ESP-Regelung innerhalb der Recheneinheit $\mu$C (EBS-Steuergerät) vorgegeben. Der Differenzdruck ist der Recheneinheit bekannt. Je nach Ausstattung des Bremsenregelvorrichtung wird dieser vollständig sensorisch oder teilweise über ein Druckmodell auf an sich bekannte Weise bestimmt. Die Federkraft, der maximale Stößelhub und die Abhängigkeit des magnetischen Flusses vom Ventilstrom werden entsprechend der weiter unten beschriebenen Messroutine einmal oder zu verschiedenen Zeitpunkten ermittelt (Rekalibrierung). Damit sind alle einwirkenden Kräfte und die berechnete Kraft/Weg-Funktion des Ventilstößels bekannt; es lässt sich der für den geforderten Druckgradienten erforderliche Ventilstrom berechnen.

Fig. 2 stellt eine weitere Möglichkeit zur Realisierung der Erfindung mit einem zusätzlichen Spulenregelkreis dar. Der geforderte Druckgradient G liegt ebenfalls in Recheneinheit ($\mu$C) vor. Der Differenzdruck ist der Recheneinheit bekannt. Die Federkraft und der maximale Stößelhub werden über die weiter unten beschriebenen Messroutine ermittelt. Der magnetische Fluss wird mit einer Messspule 2 erfasst. Die Messspule ist so angeordnet, dass sie den wirksamen magnetischen Fluss durch Joch und Anker erfasst. Beim Einschalten und Abschalten der Ventilspule wird in der Messspule eine Spannung $U_{ind}$ induziert, deren Integral proportional zum vorhandenen magnetische Fluss ist. Das Signal $\Phi_{ist}$, welches sich aus dem durch Stufe 4 erzeugten Integralwert ableitet, wird in Differenzierstufe 5 mit dem Signal $\Phi_{soll}$ zusammengeführt und bildet die Sollgröße für den Ventiltreiber 3.

Wie bereits erwähnt, lässt sich die Messroutine zum Ermitteln der ventilspezifischen Kenngrößen jederzeit, auch während des Fahrzeugbetriebs, wiederholen (Rekalibrierung), zum Beispiel um betriebsbedingte Veränderungen bzw. Verschleiß der mechanischen oder auch der elektrischen Bauteile auszugleichen. Die elektronische Ansteuerung erhöht über Treiber 3 den Spulenstrom so lange, bis der magnetische Fluss im Magnetkreis dem errechneten Fluss entspricht. Es handelt sich also bei dem in Fig. 2 dargestellten Beispiel um eine Stößelkraftregelung, bei der die Stößelstellung von den Druckverhältnissen am Ventil abhängt.

Fig. 3 zeigt den Aufbau eines erfindungsgemäß einsetzbaren Magnetventils in einem ABS/ESP-Ventilblock. Das Ventil gemäß den erfindungsgemäßen Beispielen ist ein stromlos offenes Ventil, welches auf an sich bekannte Weise mittels eines PWM-geregelten Stroms geregelt betrieben wird. Entsprechende Ventile sind unter der Bezeichnung analogisierte Digitalventile "AD-Ventil" bekannt. Nachfolgend wird der Aufbau eines solchen SO-AD-Ventils, insbesondere die die Feldlinien führenden Komponenten des magnetischen Kreises näher beschrieben. Die bestromte Ventilspule 6 dient zur Bewegung des in Ventilgehäuse 13 achsial geführten Ankers 7, welcher über Stößel 8 abdichtend in den Ventilsitz 9 eingreift. Über Ventileinlass 10 strömt Hydraulikflüssigkeit zum Ventilsitz 9 und entweicht über Auslass 12. Feder 11 drückt Stößel und Anker in die Geöffnetstellung, sofern kein Strom durch Spule 6 fließt. Bei bestromter Spule 6 durchdringen die magnetischen Feldlinien Joch 14 und dringen in Gehäuse 13 ein. Die Übergangsstelle zwischen Joch 14 und Gehäuse 13 bildet den magnetischen Widerstand $RM^{LR2}$. Im weiteren Verlauf durchdringen die Feldlinien Luftspalt 15 zwischen Anker 7 und Gehäuse 13, wobei der an diesem Ort vorhandene magnetische Widerstand mit $RM^{A}$ bezeichnet ist. Zwischen Anker 7 und Joch 14 ergibt sich ein weiterer Luftspalt, welchem der magnetischen Widerstand $RM^{LR1}$ zugeordnet ist.

Der magnetische Widerstand des Magnetkreises wird also im wesentlichen durch die Summe $RM_{ges} = RM^{LR2} + RM^{A} + RM^{LR1}$ bestimmt. Hier sieht man bereits, dass der magnetische Widerstand im wesentlichen von der Größe der fertigungsabhängigen Luftspalte und von der Stößelstellung abhängig ist. Es ist also möglich, sich den magnetischen Widerstand als Summe aus dem gemessenen magnetischen Widerstand im geschlossenen Zustand $RM_{Ventil}$ geschlossen und dem magnetischen Widerstand des Luftspaltes $RM_{Luft}$ vorzustellen:

$$RM_{gesamt} = RM_{Ventil} + RM_{Luft}.$$

Die Größe $RM_{Ventil}$ kann im geschlossenen Zustand gemessen werden und die Größe $RM_{Luft}$ ergibt sich aus der Formel $RM_{Luft} = \frac{l}{\mu_0 * A_{Anker}}$, wobei $A_{Anker}$ die für die Ventilbaureihe spezifische magnetisch wirksame Fläche des Ankers 7 (baureihenspezifische Kenngröße $KG_{all}$) und 1 der Stößelhub ist. Das eigentliche Messverfahren ermittelt den Wert für $RM_{Luft}$ nicht direkt, sondern über eine Messung des magnetischen Widerstands bei vollständig geöffnetem Ventil und Subtraktion des magnetischen Widerstands des geschlossenen Ventils. Auf diese Weise lässt sich auch der Stößelhub 1 bestimmen.

In Fig. 3 ist außerdem die zur Durchführung des in Fig. 2 beschriebenen Ausführungsbeispiels notwendige Messspule 2 dargestellt, welche im Bereich des Jochs 14 positioniert ist.

Fig. 4 stellt schematisch eine weiteres Beispiel für einen Regelkreis dar, bei dem die Stößelposition 1 direkt eingeregelt wird. Wie bereits gesagt, setzt sich der magnetische Widerstand $RM_{gesamt}$ aus dem magnetischen Widerstand des geschlossenen Ventils und dem magnetischen Widerstand des Luftspalts zusammen. Der magnetische Widerstand des geschlossenen Ventils lässt sich durch eine einmalige Messroutine bestimmen. $RM_{gesamt}$ ist der Quotient aus $\Theta$ (= I * N) und dem magnetischen Fluss $\Phi$. Die Größe $RM_{Luft}$ ergibt sich aus dem Stößelhub dividiert durch $\mu_0$ * A ($\mu_0$ = Permeabilitätskonstante, A = Querschnittsfläche). Es gilt weiterhin: $RM_{ist}^{gesamt} = \frac{\Theta_{ist}}{\Phi_{ist}}$. Diese Größe wird durch Dividierer 17 berechnet. Der Ausgang von Dividierer 17 ist mit Differenzierglied 5 verbunden. Die Größe $\Phi_{ist}$ wird bestimmt über den an der Messspule ermittelten und mittels Integrationsstufe 4 zeitlich integrierten Spannungsverlauf. Diese Größe ist proportional zum Differenzdruck. Da $RM_{gesamt}$ proportional zum Stößelhub ist, führt die dargestellte Regelung von $RM_{gesamt}$ zu einer direkten Regelung des Stößelhubs 1. Dabei setzt die Recheneinheit $\mu$C den geforderten Druckgradienten in einen bestimmten Strömungsquerschnitt bzw. Stößelhub um und damit in einen magnetischen Sollwiderstand $RM_{soll}$. Grundlage für die Berechnung sind an sich bekannte hydrodynamische Kennwerte $KG_{all}$, welche für die ganze Ventilbaureihe gültig sind und deshalb in der Recheneinheit $\mu$C fest gespeichert werden können, sowie ventilspezifische Kenngrößen $KG_{ind}$, die individuell durch das hier ebenfalls beschriebene Verfahren ermittelt werden. Diese ventilspezifischen Kenngrößen sind beispielsweise der magnetische Gesamtwiderstand des geschlossenen Ventils und die Federkraft (siehe Block 16). Für die Regelung wird außerdem, wie bereits weiter oben beschrieben, der aktuelle Differenzdruck benötigt. Gleichzeitig wird der aktuelle Ventilstrom bestimmt und mit der Windungszahl der Erregerspule multipliziert. Das Produkt ist die Durchflutung $\Theta$ (magnetische Spannung). Die aktuelle magnetische Spannung wird durch den aktuellen magnetischen Fluss dividiert. Das Ergebnis ist der aktuelle magnetische Widerstand. Zur Regelung wird ein Soll/Istwert-Vergleich durchgeführt und daraus die Stellgröße I (Spulenstrom) generiert.

Das Verfahren gemäß dem Beispiel in Fig. 4 bietet darüber hinaus die Möglichkeit, ohne zusätzliche Drucksensoren in den einzelnen Drucksensoren den Druck in den an das Ventil angeschlossenen Fluid-Leitungen zu bestimmen. Bei konstanter Stößelposition, welche durch einen Regler konstant gehalten werden muss, kann aus der aktuell bei dieser Stößelposition gemessenen Stößelkraft in Verbindung mit den bekannten allgemeinen Kenngrößen $KG_{all}$ des Ventils der Druck analog dem oben beschriebenen Verfahren berechnet werden.

In einem Kraftfahrzeugbremssystem wird der Eingangsdruck z.B. durch die Bremspedalbetätigung bestimmt. Bekanntlich weicht zum Beispiel während eines ABS-Regelvorgangs der Eingangsdruck vom Druck in den einzelnen, zu den Bremszylindern führenden Hydraulikleitungen ab. Da im Prinzip nach dem vorhergehenden Messverfahren lediglich der am Ventil herrschende Differenzdruck bestimmbar ist, kann es erforderlich sein, den Vordruck sensorisch zu bestimmen (z.B. Drucksensor am Tandemhauptzylinder). Der Vordruck kann jedoch auch rechnerisch über Modellbetrachtungen bestimmt werden. Des weiteren ist es möglich, durch Betrachtung bestimmter Betriebszustände des Bremssystems den Druck auch ohne genaue Kenntnis des Vordrucks zu bestimmten. Auf diese Weise ist eine vollkommen drucksensorlose Druckbestimmung realisierbar. Hierdurch werden in einem ABS/ESP-Bremsensteuergerät erhebliche Kosten für zusätzliche Drucksensoren eingespart.

Das Diagramm in Fig. 5 zeigt den Stromverlauf in einer Ventilspule nach dem Abschalten des Stroms bei einem geschlossenen Ventil. Aus dem Integral unter der Stromkurve lässt sich der magnetische Widerstand $RM_{ges}$ bei bekannter Spulenwindungszahl N ermitteln. Der physikalische Zusammenhang ergibt sich aus den im Kasten von Fig. 5 angegebenen Formeln, wobei $W_L$ die magnetische Energie des magnetischen Kreises und R der ohmsche Widerstand des elektrischen Spulenkreises ist.

Ein Beispiel zur Durchführung eines Messverfahrens zur Bestimmung des magnetischen Widerstands entsprechend dem Prinzip in Fig. 5 ist in Fig. 6 skizziert. In einem ersten Schritt wird ein Stromwert $I_0$ durch das EBS-Steuergerät (geregelt) eingestellt, bei dem das Ventil sicher geschlossen ist. Danach wird der duty-cycle der PWM-Regelung so eingestellt, dass kein Strom mehr in die Spulentreiber eingespeist wird. Der durch die Induktivität gespeicherte Strom klingt über die Rezirkulationsmöglichkeit der Endstufe ab.

Anschließend erfolgt eine Messung des Stromverlaufs zu vorgegebenen Zeitpunkten in gleichem Abstand ($I_1$, $I_2$, $I_3$,...) im Zeitraum von $t_1$ bis $t_2$. Die gemessenen Stromwerte werden durch die im Steuergerät durchgeführte Software gespeichert. Die im Kasten von Fig. 6 angegebene Formel zeigt eine Möglichkeit zur Bildung des Integrals $W_L$ über eine Summe.

Gemäß dem in Fig. 7 skizzierten Verfahren wird zunächst sukzessive, von einem geeignet kleinen Strom von zum Beispiel $I \approx 0$ beginnend, der Strom schrittweise erhöht. In Teilbild a) wird der Strom zunächst auf einem Wert $I_1$ gehalten, bei dem das Ventil gerade noch geöffnet ist, d.h. bei einem höheren Strom würde das Ventil schließen. Zum Zeitpunkt $t_1$ wird der Strom abgeschaltet und die Zeit $\tau_1$ gemessen, bis der aktuelle Stromwert unterhalb eines Schwellenwertes S (Zeitpunkt $t_2$) gefallen ist. Aufgrund der Geöffnetstellung des Ventils ergibt sich eine niedrige Induktivität und damit eine kurze Zeitkonstante $\tau_1$ beim exponentiellen Stromabklingverhalten.

In Teilbild b) ist der Stromverlauf gezeigt, wenn das entsprechende Ventil mit einem Strom $I_2$ angesteuert wird, welcher ein Schließen des Ventils bewirkt. Der Schließvorgang ist an einer kurzzeitigen Erhebung 71 des Stromes im Konstantstrombereich erkennbar. Zum Zeitpunkt $t_1$ wird der Strom wie oben abgeschaltet, der Strom klingt abermals bis unterhalb der Schwelle S ab. Im Gegensatz zum offenen Ventil ist jedoch die Zeitkonstante $\tau_2$ des zunächst geschlossenen Ventils auf Grund des niedrigeren magnetischen Widerstands (höhere Induktivität) in Teilbild b) höher, als die entsprechende Zeitkonstante in Teilbild a). Zudem bewirkt das Öffnen des Ventils, welches ebenfalls an einer Erhebung 72 im Stromverlauf erkennbar ist, ebenfalls eine Verlängerung der Zeitkonstante.

In Fig. 8 ist schematisch ein Beispiel für einen Algorithmus 82 zur Berechnung der Ventilöffnungsstromkennlinie mittels den nach den Beispielen in den Figuren 5 bis 7 ermittelten ventilspezifischen individuellen Kenngrößen $KG_{ind}$ (Messverfahren 81) in einer elektrohydraulischen Steuervorrichtung 82 dargestellt. Bei den ventilspezifischen individuellen Kenngrößen $KG_{ind}$ kann es sich ganz allgemein um Kennlinien oder Parameter des Ventils handeln. In einem elektronischen Bremsensteuergerät mit ABS-Funktion und ggf. weiteren Funktionen, wie ASR, ESP etc., wird für eine Ventilregelung mit hoher Genauigkeit eine Kurve benötigt, welche den zum Öffnen des Ventils notwendigen Strom bei einem vorgegebenen Differenzdruck $\Delta P$ angibt (differenzdruckabhängige Ventilöffnungsstromkennlinie $f(\Delta P)$). Für Algorithmus 82 werden eingangsseitig im Regler gespeicherte allgemeingültige Kenngrößen $KG_{all}$, welche für die Ventilserie kennzeichnend sind, vorgegeben. Diese können durch die baureihenspezifische Ankerfläche $A_{Anker}$ und die Ventilabdichtfläche $A_{Abdicht}$ näher bezeichnet werden. Weiterhin wird der aktuelle Differenzdruck $\Delta P$ für das betreffende Ventil am Eingang als variable Größe (Var) vorgegeben, welche entweder sensorisch bestimmt oder durch das EBS-System aus anderen Größen näherungsweise berechnet wird.

Entsprechend Algorithmus 82 wird nach Maßgabe des im Regler festgelegten Abdichtquerschnitts $A_{Abdicht}$ (allgemeingültige Ventilkenngröße $KG_{all}$) zunächst die hydraulische Kraft $F_{Hydraulik}$ über $F_{Hydraulik} = \Delta P * A_{Abdicht}$ berechnet. Mit der vorgegebenen Ankerfläche $A_{Anker}$ und dem magnetischen Widerstand RM lässt sich die stromabhängige magnetische Kraft $F_{magn}(I)$ berechnen. Im Gleichgewichtszustand ist das Ventil gerade noch geschlossen. Die magnetische Kraft $F_{magn}$, die hierzu notwendig ist, ergibt den Haltestrom:

$$F_{Feder} + F_{Hydraulik} = F_{magn}$$

Mit dieser Formel lässt sich demzufolge unter Berücksichtigung der Ventilabdichtfläche und dem Abdichtquerschnitt der differenzdruckabhängige Haltestrom für diskrete Differenzdrücke (kein Volumenstrom im Ventil) relativ genau berechnen.

Für die Anwendung in einem EBS-System ist es außerdem zweckmäßig, zur weiteren Erhöhung der Genauigkeit der ermittelten Halteströme die nachfolgend beschriebenen Korrekturmaßnahmen A) bis C) zusätzlich durchzuführen:

<u>A) Öffnungsstrom/Haltestromkorrektur</u>

Die auf Grundlage der Bilanzgleichung $F_{Feder} + F_{Hydraulik} = F_{magn}$ bei einer bestimmten Druckdifferenz ermittelten sogenannten Halteströme entsprechen noch nicht den für das Öffnen des Ventils tatsächlich notwendigen Öffnungsströmen, da diese durch Strömungseffekte immer etwas niedriger sind, als die berechneten Halteströme. Es hat sich gezeigt, dass die genauere Öffnungsstromkennlinie $I_{Öffnung}(\Delta P)$ bevorzugt dadurch ermittelt werden kann, dass in dem benötigten Druckdifferenzbereich der Haltestromkennlinie $I_{Halte}(\Delta P)$ ein konstanter negativer Stromoffset $I_{korr}^{const}$ zuaddiert wird. Der Stromoffset lässt sich durch geeignete Versuche ohne weiteres ermitteln:

$$I_{Öffnung}(\Delta P) = I_{Halte}(\Delta P) - I_{korr}^{const}$$

B) Magnetische Korrektur

Die weiter oben beschriebene Berechnung der Haltestromkennlinie geht von der vereinfachten Annahme aus, dass der magnetische Widerstand bei geschlossenem Ventil nicht vom Strom abhängt. Auf Grund des Einflusses der im magnetischen Kreis des Ventils vorhandenen ferromagnetischen Materialien ist jedoch zur weiteren Erhöhung der Genauigkeit noch ein Korrekturterm sinnvoll, mit dem dieser Einfluss des "Eisenkreises" korrigiert werden kann. Zur Korrektur dieses Einflusses wird insbesondere in erster Näherung eine Geradengleichung für den Widerstandsverlauf des magnetischen Widerstands RM(I) = m * I + b für das geschlossene Ventil angenommen. Diese Kurve lässt sich durch Messung von RM bei verschiedenen Strömen $I_1$, $I_2$, $I_n$ bestimmen, wobei alle In größer als der Schließstrom des jeweiligen Ventils sind. Im vorliegenden Beispiel ergibt sich eine Steigung von m im Bereich von $10^6 \frac{Vs}{I}$. Durch Einsetzen des beschriebenen Korrekturterms in die Formel zur Berechnung von $F_{magn}$ kann dann eine korrigierte Haltestromkennlinie ermittelt werden, welche von dem Einfluss der ferromagnetischen Materialien weitestgehend bereinigt ist.

C) Thermische Korrektur

Wie aus den im Kasten von Fig. 5 angegebenen Formeln hervorgeht, ist der magnetische Widerstand $RM_{ges}$ proportional zu $1/R_L$, wobei $R_L$ der Spulenwiderstand ist, wenn zur Vereinfachung davon ausgegangen wird, dass der Widerstand des elektrischen Kreises ausschließlich durch den Spulenwiderstand bestimmt ist. Im weiter oben beschriebenen Verfahren wurde bisher immer davon ausgegangen, dass $R_L$ eine baureihenspezifische Kenngröße ist, die nicht berücksichtigt zu werden braucht. Über den Spulenwiderstand wirken sich nun aber Temperaturänderungen der Spule unerwünschterweise auch auf den gemessenen magnetischen Widerstand aus. Ein Korrekturterm, welcher diesen Einfluss beseitigt, führt deshalb zu einem noch weiter verbesserten Berechnungsverfahren. Eine solche thermische Korrektur des gemessenen magnetischen Widerstands kann vorzugsweise dadurch herbeigeführt werden, dass über den duty-cycle der pulsweitenmodulierten Ventilansteuerung der Spulenwiderstand bestimmt wird. Ein hierfür geeignetes Verfahren zur Bestimmung des Spulenwiderstands ist in der WO 03/074338 A1 beschrieben.

Die obigen Ausführungen beziehen sich auf ein Ventil, welches stromlos offen ist. In analoger Weise lässt sich das beschriebene Verfahren auch für Ventile einsetzen, welche stromlos geschlossen sind.

Das in Fig. 9a dargestellte Ausführungsbeispiel bezieht sich auf eine Schaltungsanordnung wie in Fig. 1 beschrieben, mit dem Unterschied, dass zur vereinfachten Messung der Induktionsspannung ein in Fig. 11 dargestellter Rechteckformer 19 vorgesehen ist. Rechteckformer 19 lässt sich ebenfalls vorteilhaft an Stelle der Messeinrichtung 4 in Fig. 2 einsetzen. Wie bereits weiter oben beschrieben wurde, umfasst der EBS-Regler eine Treiberschaltung 3 (Stromquelle), mit der der Ventilstrom I individuell für jedes Ventil pulsweitenmoduliert eingestellt und auch gemessen werden kann. In Verbindung mit Rechteckformer 19 kann die Induktionsspannung $U_{ind}$ auf einfache Weise über eine Zeitmessung, wie in Teilbild b) skizziert, gemessen werden. Der magnetische Fluss in Spule 1 des Stellgeräts induziert beim Abschalten des Stroms zum Zeitpunkt $t_0$ eine Spannung $U_L$ (Klemmspannung), so dass der Strom während des Abschaltens in einer Zeit $t_c$ auf etwa den Wert 0 abfällt. Der Spannungsverlauf von $U_L$ ist in Fig. 10a) näher dargestellt. Der währenddessen durch die PWM-Ventilansteuerung hervorgerufene Stromverlauf geht aus Fig. 10b) hervor.

Die Größen $R_L$ (Widerstand der Spule), $U_L$ (eingeregelte Abkommutierspannung), sowie $I_0$ (Ventilstrom) sind der Recheneinheit 18 bekannt. Die Zeit $t_c$, die proportional zur Induktivität $L$ ist, wird mittels Rechteckformer 19 erfasst. Am Ausgang von Rechteckformer 19 liegt ein elektrisches Signal vor, welches proportional zu $t_c$ ist. Dieses Signal wird über Leitung 20 Recheneinheit 18 als Istgröße für die vorzunehmende Regelung zugeführt.

Aus der elektronischen Schaltungsanordnung in Fig. 11 ergibt sich die Wirkungsweise des Rechteckformers 19. Stromquelle 3 setzt sich zusammen aus einem Stromtreiber 21 und einem Rezirkulationskreis 22, welcher den Rezirkulationsstrom nach dem Abschalten des Stroms zum Zeitpunkt $t_0$ mit einem steuerbaren Widerstand regelt, wobei Rezirkulationskreis 22 von der Recheneinheit 18 angesteuert ist. Ein entsprechender Schaltkreis zum Ansteuern von Hydraulikventilen ist aus der Patentanmeldung DE 102004017239.0 bereits bekannt. Mit Klemme $U_0$ ist ein erster Spannungsteiler 51, bestehend aus Widerständen $R_1$ und $9R_1$ verbunden, welcher die hohen Spannungswerte $U_0$ am Signaleingang S+ des Komparators 53 um etwa den Faktor 10 reduziert. Ein zweiter Spannungsteiler 52 erzeugt am Eingang S- des Komparators 53 eine Referenzspannung, die gleich der halben Logikversorgungsspannung ist. Komparator 53 bewertet somit die Differenz der Signale S+ und S-, wodurch ein geeignetes Rechtecksignal erzeugt wird.

Mittels des Rezirkulationskreises 22 kann der Strom nach dem Abschalten innerhalb relativ kurzer Zeit (weniger als 1 ms) abkommutiert werden, wie in Fig. 10b dargestellt ist. Dabei kann die Klemmspannung $U_L$ auf einen konstanten Wert $U_{const}$ (Fig. 10a) eingestellt werden. Während einer an sich bekannten pulsweitenmodulierten Regelung (PWM) des Ventilstromes steigt die Spannung an $U_0$ auf maximal ca. 18 V, so dass der Eingang S+ niemals größer als 2.5 V wird. Der Ausgang des Komparators bleibt somit auf "logisch 0". Zu Beginn einer Abkommutierung steigt die Spannung $U_0$ jedoch auf beispielsweise 35 V an, wodurch *S+* mit dann 3.5 V deutlich höher als *S-* liegt. Die Folge davon ist ein Umschalten des Komparators auf "logisch 1", bis die Spannung $U_0$ entsprechend dem Ende der Abkommutierung wieder auf 0 V abfällt. Danach schaltet auch der Komparator wieder auf "logisch 0" um. Somit entspricht die Dauer der "logischen 1" am Ausgang des Komparators genau der Dauer $t_c$ der Abkommutierung.

Die Induktivität der Spule errechnet sich aus dem Stromverlauf während des Abkommutierens zwischen Zeitpunkt $t_0$ und Zeitpunkt $t_1$ nach der Formel:

$$u_L = L \cdot \frac{di}{dt}$$

Durch die spezielle Ansteuerung, bei der $U_L$ zwischen der Zeit $t_0$ und $t_1$ konstant gehalten wird, wird das zur Bestimmung der Induktivität der Spule zu berechende zeitliche Integral über den Strom besonders einfach. Die Induktivität der Ventilspule kann dann besonders einfach ermittelt werden durch

$$L = \frac{-t_c \cdot R_L}{\ln\left(\frac{u_L}{I_0 \cdot R_L + u_L}\right)}.$$

## Patentansprüche

1. Verfahren zur Kalibrierung oder mechanischen Justage oder Berechnung eines Ansteuerstroms, insbesondere des Öffnungsstroms, mindestens eines elektromagnetisch ansteuerbaren Stellgeräts zum Regeln des differenzdruckabhängigen Durchflusses G($\Delta P$,I,KG) eines Fluids, bei dem das Maß der durch das Stellgerät hervorgerufenen Druckbeeinflussung durch die Stärke der elektrischen Ansteuerung des Stellgeräts im Voraus auch ohne die Verwendung von Drucksensoren bestimmt werden kann, in dem eine oder mehrere stellgerätespezifische Kennlinien, Kennfelder oder Kenngrößen $KG_{ind}$ für das Stellgerät herangezogen werden, so dass vermittels dieser Kenngrößen ein Solldurchfluss G gezielt in Abhängigkeit von der Stromstärke I eingestellt werden kann, **dadurch gekennzeichnet, dass** die stellgerätespezifischen Kenngrößen ohne die Verwendung von Druckbeaufschlagungen (Differenzdruck $\Delta P = 0$) des Stellgeräts automatisch ermittelt werden.

2. Verfahren nach Anspruch 1, **dadurch gekennzeichnet, dass** für die Berechnung der stellgerätespezifischen Kenngrößen der Öffnungsweg 1 und/oder die Federkraft $F_{Feder}$ des Stellgeräts bestimmt wird.

3. Verfahren nach Anspruch 1 oder 2, **dadurch gekennzeichnet, dass** neben den stellgerätespezifischen Kenngrößen $KG_{ind}$ auch allgemeine, baureihenspezifische Kenngrößen $KG_{all}$ zur Berechnung des Ansteuerstroms herangezogen werden.

4. Verfahren nach mindestens einem der vorhergehenden Ansprüche, **dadurch gekennzeichnet, dass** der funktionale Zusammenhang des Durchflusses G in Abhängigkeit vom Ansteuerstrom I nach der Formel $G = G_0 + m * I$ angenähert wird, wobei der Druckgradient $G_0$ bei einem Strom von I = 0 durch Messung mindestens einer individuellen magnetischen Kenngröße bei offenem und/oder geschlossenem Ventil bestimmt wird, wobei insbesondere die mindestens eine Kenngröße durch Messung des magnetischen Widerstands bei offenem und geschlossenen Ventil und/oder der Federkraft bestimmt wird.

5. Verfahren nach mindestens einem der vorhergehenden Ansprüche, **dadurch gekennzeichnet, dass** die allgemeinen, baureihenspezifischen Kenngrößen $KG_{all}$ des Stellgeräts in einem Speicher dauerhaft gespeichert werden, wobei diese Kenngrößen insbesondere spätestens am Bandende in den Speicher übertragen werden.

**6.** Verfahren nach mindestens einem der vorhergehenden Ansprüche, **dadurch gekennzeichnet, dass** als stellgerätespezifische Kenngrößen die Stößelkraft oder der magnetische Widerstand RM bestimmt wird, insbesondere in der vollständig geöffneten und/oder vollständig geschlossenen Position des Stellgeräts.

**7.** Verfahren nach mindestens einem der vorhergehenden Ansprüche, **dadurch gekennzeichnet, dass** aus der Stößelkraft oder dem magnetischen Widerstand die Stellung des Stößels bestimmt wird.

**8.** Verfahren nach mindestens einem der vorhergehenden Ansprüche, **dadurch gekennzeichnet, dass** die an der Ansteuerspule als Folge einer Stromänderung induzierte Spannung gemessen und insbesondere integriert wird.

**9.** Verfahren nach mindestens einem der vorhergehenden Ansprüche, **dadurch gekennzeichnet, dass** der Fluss $\Phi$ oder der magnetische Widerstand RM über eine Regelschleife geregelt wird.

**10.** Verfahren nach mindestens einem der vorhergehenden Ansprüche, **dadurch gekennzeichnet, dass** der Haltestrom und/oder Öffnungsstrom des Stellgeräts aus den stellgerätespezifischen Kenngrößen ermittelt werden.

**11.** Verfahren nach mindestens einem der Ansprüche 1 bis 10, **dadurch gekennzeichnet, dass** der Ventilöffnungsstrom durch einen Korrekturterm korrigiert wird, welcher den stromabhängigen Einfluss des ferromagnetischen Magnetkreises mitberücksichtigt.

**12.** Verfahren nach mindestens einem der Ansprüche 1 bis 11, **dadurch gekennzeichnet, dass** zunächst der Ventilhaltestrom berechnet wird und daraus mittels eines weiteren Korrekturterms oder eines Offsets der Ventilöffnungsstrom ermittelt wird.

**13.** Verfahren nach mindestens einem der Ansprüche 1 bis 12, **dadurch gekennzeichnet, dass** das Stellgerät mittels eines pulsweitenmodulierten Stroms (PWM) angesteuert werden, wobei der Spulenwiderstand über den duty-cycle der PWM-Ansteuerung bestimmt wird, und dass der Spulenwiderstand bei der Berechnung der stellgeräteindividuellen Parameter $KG_{ind}$ mitberücksichtigt wird.

## Claims

**1.** Method for the calibration or mechanical adjustment or calculation of a drive current, in particular the opening current, of at least one electrically operable actuator for controlling the flow G($\Delta P$,I,KG) of a fluid responsive to the differential pressure, wherein the indicator of the influencing of the pressure caused by the actuator can be determined in advance by the intensity of the electric actuation of the actuator even without the use of pressure sensors, with one or more actuator-related characteristic curves, characteristic fields, or parameters $KG_{ind}$ for the actuator being taken into account so that by means of these parameters a nominal flow G can be adjusted in a defined fashion in dependence on the current intensity I,
**characterized in that** the actuator-related parameters are established automatically without using pressurizations (differential pressure $\Delta P = 0$) of the actuator.

**2.** Method as claimed in claim 1,
**characterized in that** the opening travel 1 and/or the spring force $F_{spring}$ of the actuator are determined for the calculation of the actuator-related parameters.

**3.** Methodasclaimedinclaim1or2,
**characterized in that** apart from the actuator-related parameters $KG_{ind}$, general parameters $KG_{gen}$ related to the line of products are taken into consideration for calculating the drive current.

**4.** Method as claimed in at least one of the preceding claims,
**characterized in that** the functional interrelationship of the flow G depending on the drive current I is approximated according to the formula $G = G_0 + m * I$, where the pressure gradient $G_0$ at a current of $I = 0$ is determined by measuring at least one individual magnetic parameter, with the valve open and/or closed, and in particular the at least one parameter is determined by measuring the magnetic resistance, with the valve open and closed, and/or the spring force.

5. Method as claimed in at least one of the preceding claims, **characterized in that** the general parameters $KG_{gen}$ of the actuator, being related to the line of products, are durably stored in a memory, and these parameters are transferred into the accumulator in particular at the end of the assembly line at the latest.

6. Method as claimed in at least one of the preceding claims, **characterized in that** the tappet force or the magnetic resistance RM is determined as actuator-related parameters, in particular in the fully opened and/or fully closed position of the actuator.

7. Method as claimed in at least one of the preceding claims, **characterized in that** the position of the tappet is determined from the tappet force or the magnetic resistance.

8. Method as claimed in at least one of the preceding claims, **characterized in that** the voltage induced at the drive coil as a consequence of a current variation is measured and more particularly integrated.

9. Method as claimed in at least one of the preceding claims, **characterized in that** the flux $\Phi$ or the magnetic resistance RM is controlled by way of a control loop.

10. Method as claimed in at least one of the preceding claims, **characterized in that** the holding current and/or opening current of the actuator is determined from the actuator-related parameters.

11. Method as claimed in at least one of claims 1 to 10, **characterized in that** the valve opening current is corrected by a correction term, which also takes into consideration the current-responsive influence of the ferromagnetic circuit.

12. Method as claimed in at least one of claims 1 to 11, **characterized in that** initially the valve holding current is calculated, and the valve opening current is determined therefrom by means of an additional correction term or an offset.

13. Method as claimed in at least one of claims 1 to 12, **characterized in that** the actuator is driven by means of a pulse-width modulated current (PWM), and the coil resistance is determined by way of the duty cycle of the PWM actuation, and **in that** the coil resistance is also taken into account in the calculation of the parameters $KG_{ind}$ in each individual actuator.

**Revendications**

1. Procédé d'étalonnage ou d'ajustage mécanique ou de calcul d'un courant d'attaque, en particulier du courant d'ouverture, d'au moins un appareil de réglage à commande électromagnétique pour la régulation du débit G ($\Delta$P, I, KG) dépendant de la pression différentielle d'un fluide, dans lequel la mesure de l'influence de l'appareil de réglage sur la pression peut être déterminée au préalable, par la force de la commande électrique, même sans utilisation de capteurs de pression, dans lequel une ou plusieurs courbes caractéristiques spécifiques de l'appareil de réglage, champs caractéristiques ou grandeurs caractéristiques $KG_{ind}$ pour l'appareil de réglage sont utilisés, ce qui fait qu'au moyen de ces grandeurs caractéristiques il est possible de régler, de manière ciblée, un débit de consigne G, en fonction de l'intensité de courant I, **caractérisé en ce que** les grandeurs caractéristiques spécifiques de l'appareil de réglage sont déterminées automatiquement sans utilisation de mises en pression (pression différentielle $\Delta P = 0$) de l'appareil de réglage.

2. Procédé selon la revendication 1, **caractérisé en ce que** la course d'ouverture 1 et/ou la force de ressort $F_{Feder}$ de l'appareil de réglage sont déterminées pour le calcul des grandeurs caractéristiques spécifiques de l'appareil de réglage.

3. Procédé selon la revendication 1 ou 2, **caractérisé en ce que** des grandeurs caractéristiques $KG_{all}$ générales, spécifiques de la série sont aussi utilisées, outre les grandeurs caractéristiques $KG_{ind}$ spécifiques de l'appareil de réglage, pour calculer le courant d'attaque.

4. Procédé selon l'une au moins des revendications précédentes, **caractérisé en ce que** la relation fonctionnelle du débit G en fonction du courant d'attaque I est approchée selon la formule $G = G_0 + m * I$, le gradient de pression $G_0$ pour un courant $I = 0$ étant déterminé par mesure d'au moins une grandeur caractéristique magnétique individuelle, lorsque la soupape est ouverte et/ou fermée, la au moins une grandeur caractéristique en particulier étant déterminée par mesure de la résistance magnétique, lorsque la soupape est ouverte et fermée, et/ou de la force de ressort.

5. Procédé selon l'une au moins des revendications précédentes, **caractérisé en ce que** les grandeurs caractéristiques $KG_{all}$ générales, spécifiques de la série, de l'appareil de réglage sont mémorisées de manière durable dans une mémoire, ces grandeurs caractéristiques étant transférées à la mémoire, en particulier au plus tard en fin de chaîne.

6. Procédé selon l'une au moins des revendications précédentes, **caractérisé en ce que** sont déterminées, comme grandeurs caractéristiques spécifiques de l'appareil de réglage, la force du poussoir ou la résistance magnétique RM, en particulier dans la position totalement ouverte et/ou totalement fermée de l'appareil de réglage.

7. Procédé selon l'une au moins des revendications précédentes, **caractérisé en ce que** la position du poussoir est déterminée à partir de la force du poussoir ou de la résistance magnétique.

8. Procédé selon l'une au moins des revendications précédentes, **caractérisé en ce que** la tension induite sur la bobine de commande à la suite d'une variation du courant, est mesurée et en particulier intégrée.

9. Procédé selon l'une au moins des revendications précédentes, **caractérisé en ce que** le flux $\Phi$ ou la résistance magnétique RM est régulé à travers une boucle de régulation.

10. Procédé selon l'une au moins des revendications précédentes, **caractérisé en ce que** le courant de maintien et/ou le courant d'ouverture de l'appareil de réglage sont déterminés à partir des grandeurs caractéristiques spécifiques de l'appareil de réglage.

11. Procédé selon l'une au moins des revendications 1 à 10, **caractérisé en ce que** le courant d'ouverture de soupape est corrigé par un terme de correction, qui prend en compte aussi l'influence dépendant du courant du circuit ferromagnétique.

12. Procédé selon l'une au moins des revendications 1 à 11, **caractérisé en ce que** le courant de maintien de soupape est d'abord calculé et à partir de celui-ci, le courant d'ouverture de soupape est déterminé au moyen d'un autre terme de correction ou d'un offset.

13. Procédé selon l'une au moins des revendications 1 à 12, **caractérisé en ce que** l'appareil de réglage est commandé au moyen d'un courant modulé en largeur d'impulsion (PWM), la résistance de la bobine étant déterminée à travers le facteur d'utilisation de la commande PWM, et **en ce que** la résistance de la bobine est prise en compte aussi lors du calcul des paramètres individuels $KG_{ind}$ de l'appareil de réglage.

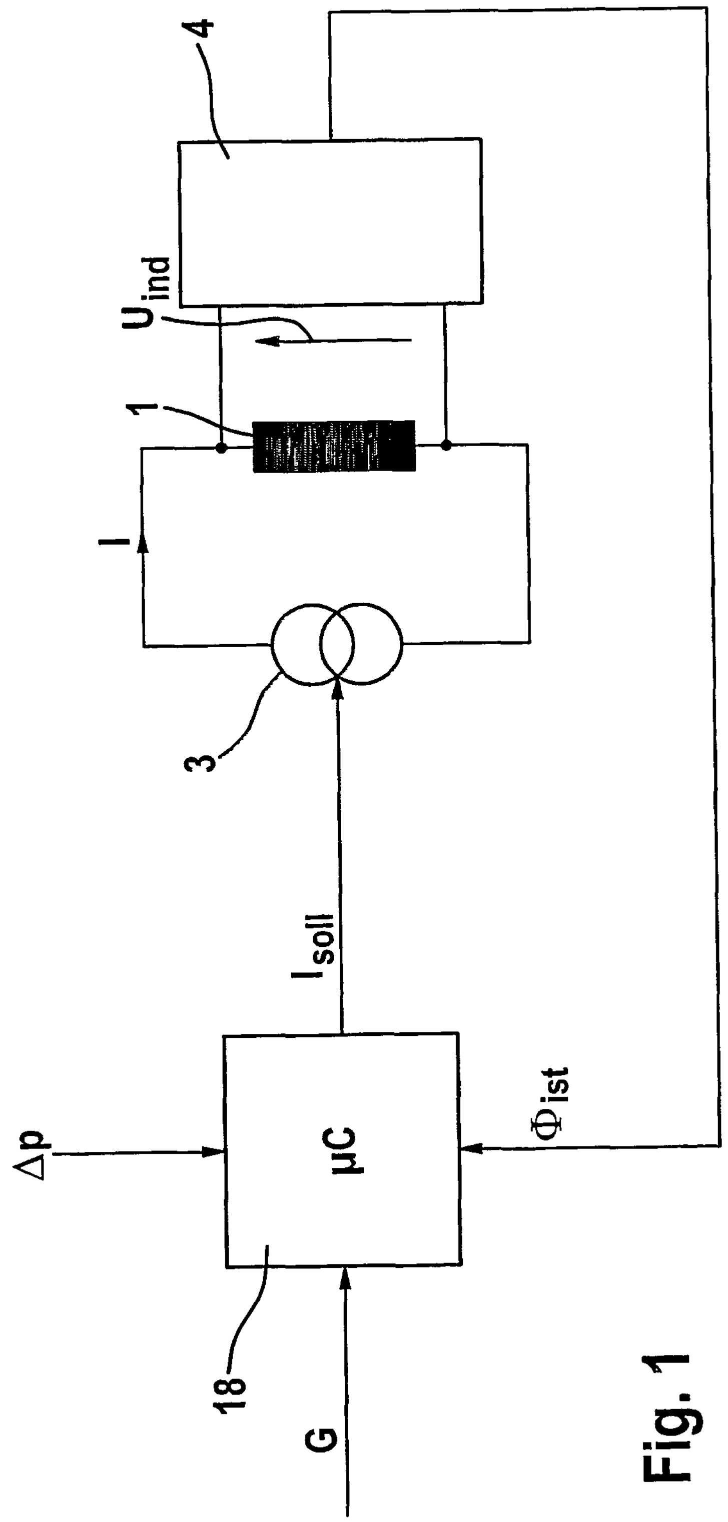


Fig. 1

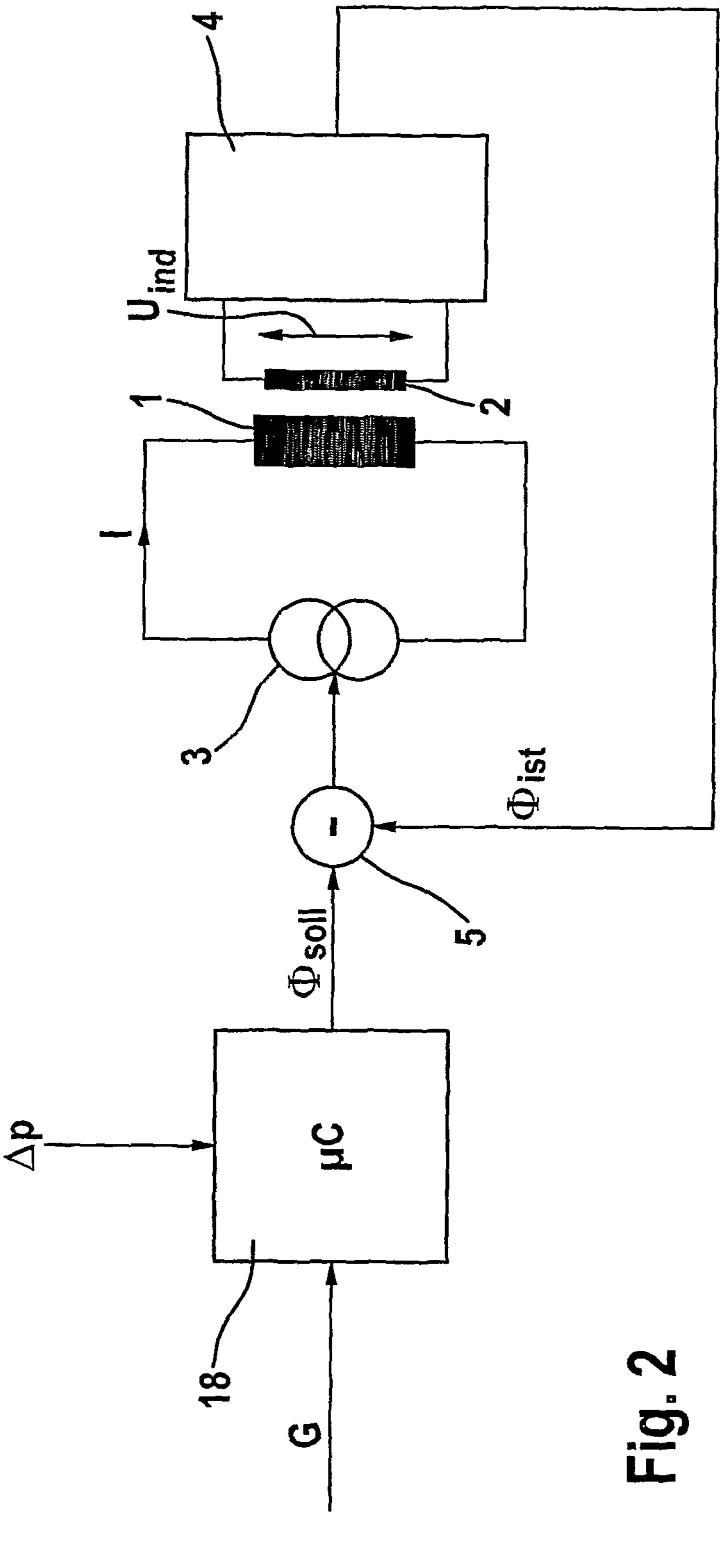


Fig. 2

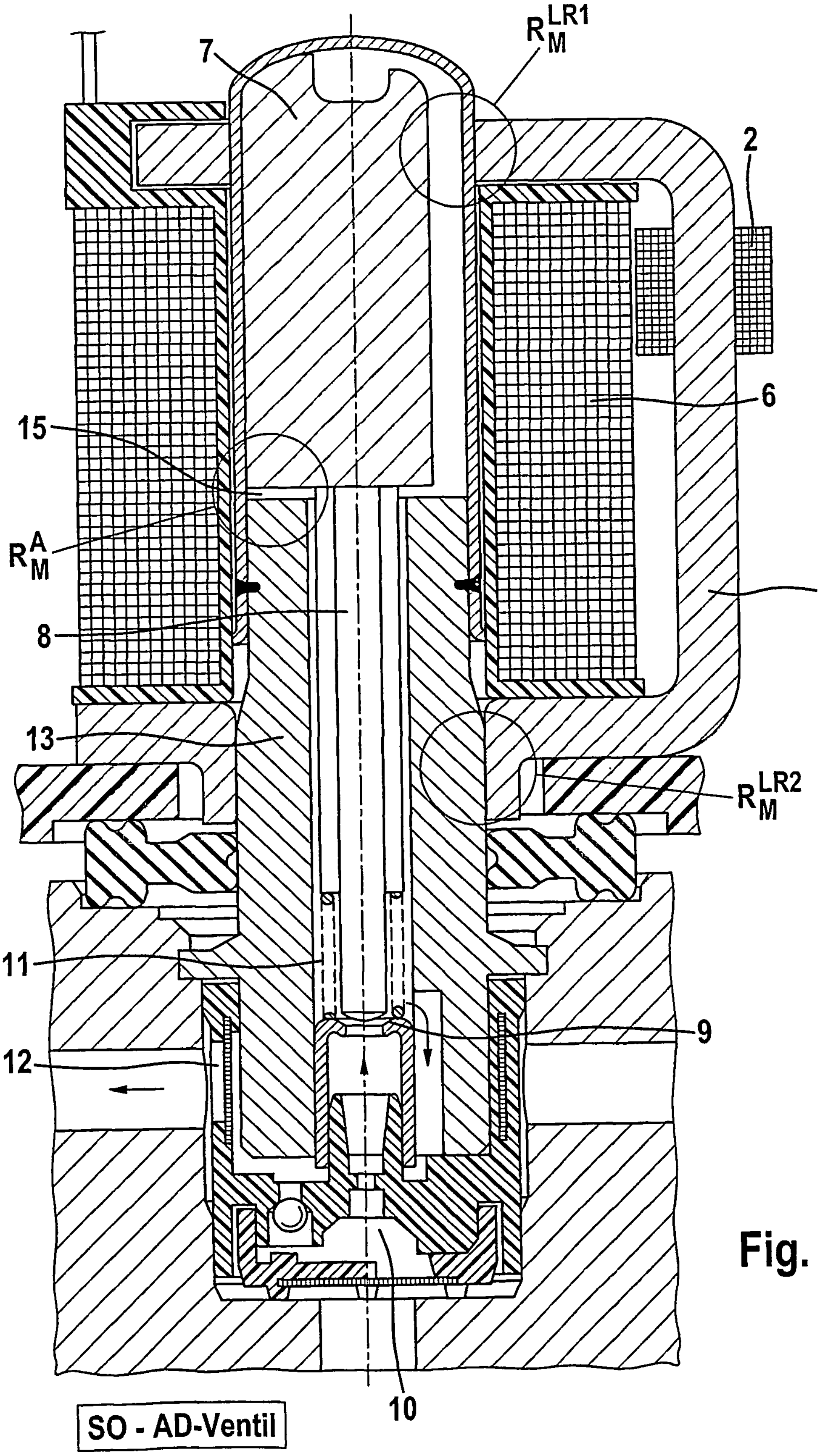


Fig. 3

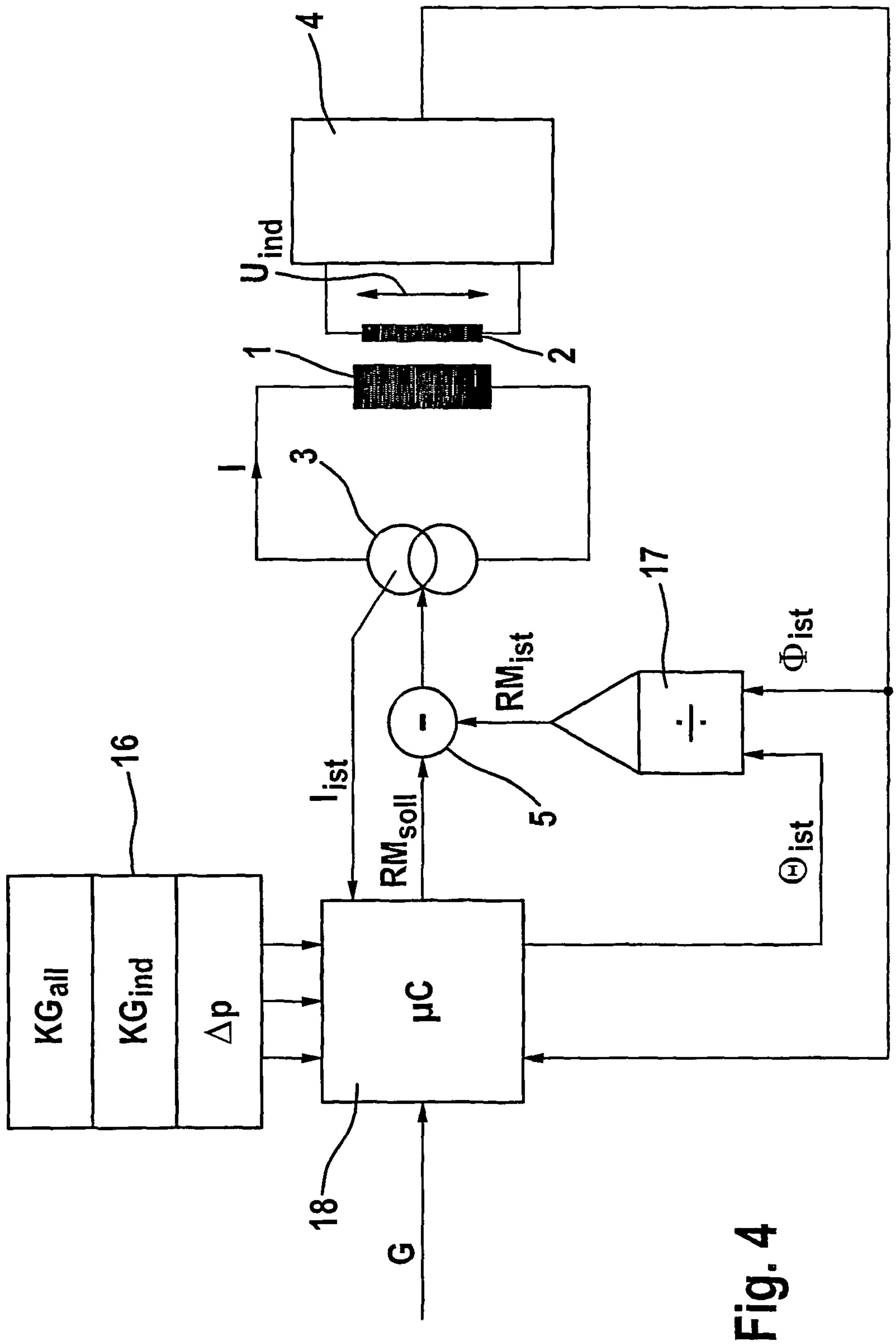
4
$U_{ind}$
1
2
3
I
17
$RM_{ist}$
$\Phi_{ist}$
16
$I_{ist}$
$RM_{soll}$
5
$\Theta_{ist}$
$KG_{all}$
$KG_{ind}$
$\Delta p$
µC
18
G

Fig. 4

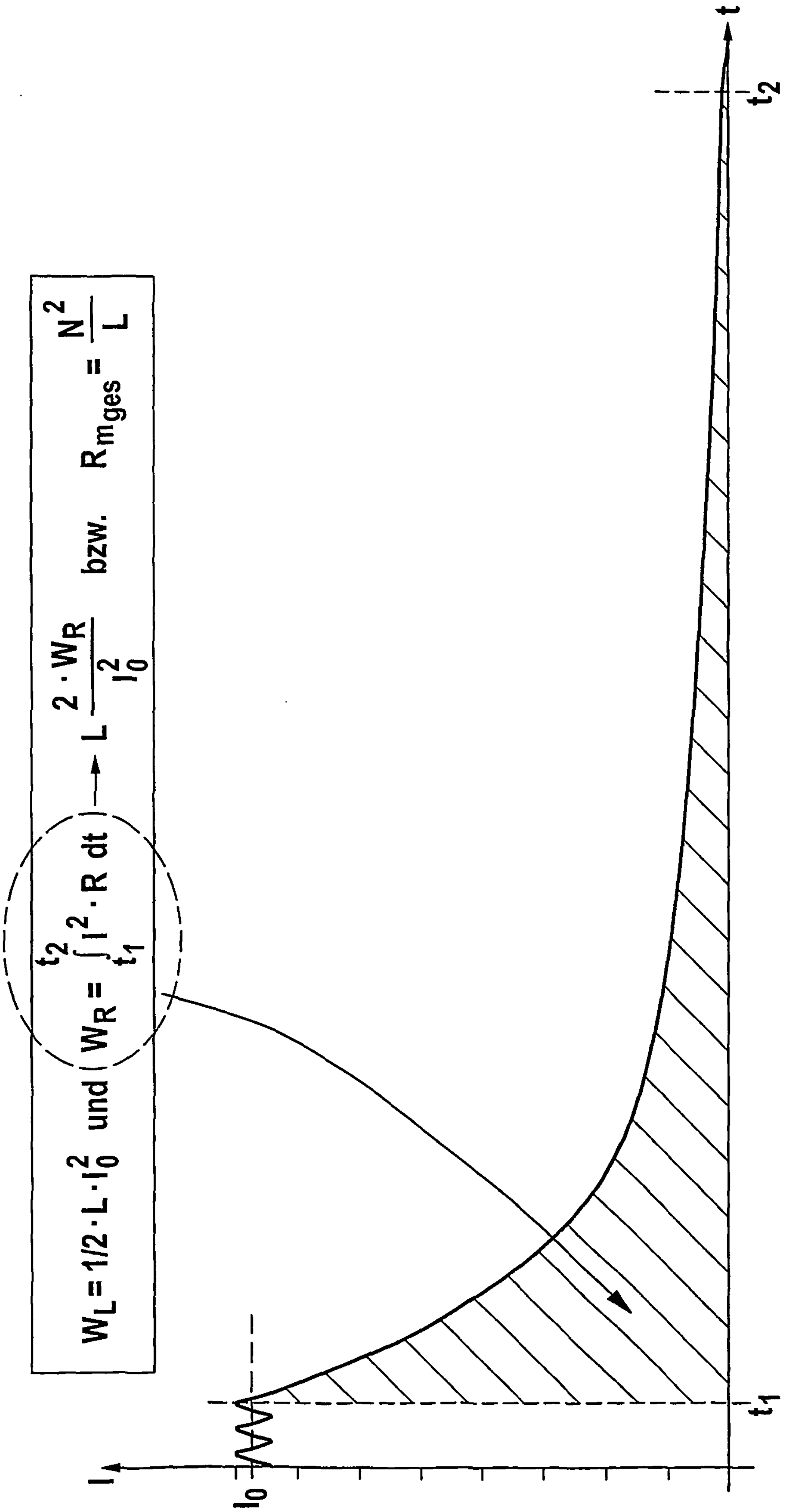

$W_L = 1/2 \cdot L \cdot I_0^2$ und $W_R = \int_{t_1}^{t_2} I^2 \cdot R \, dt$ → $L \frac{2 \cdot W_R}{I_0^2}$ bzw. $R_{mges} = \frac{N^2}{L}$
I
$I_0$
t
$t_1$
$t_2$


Fig. 5

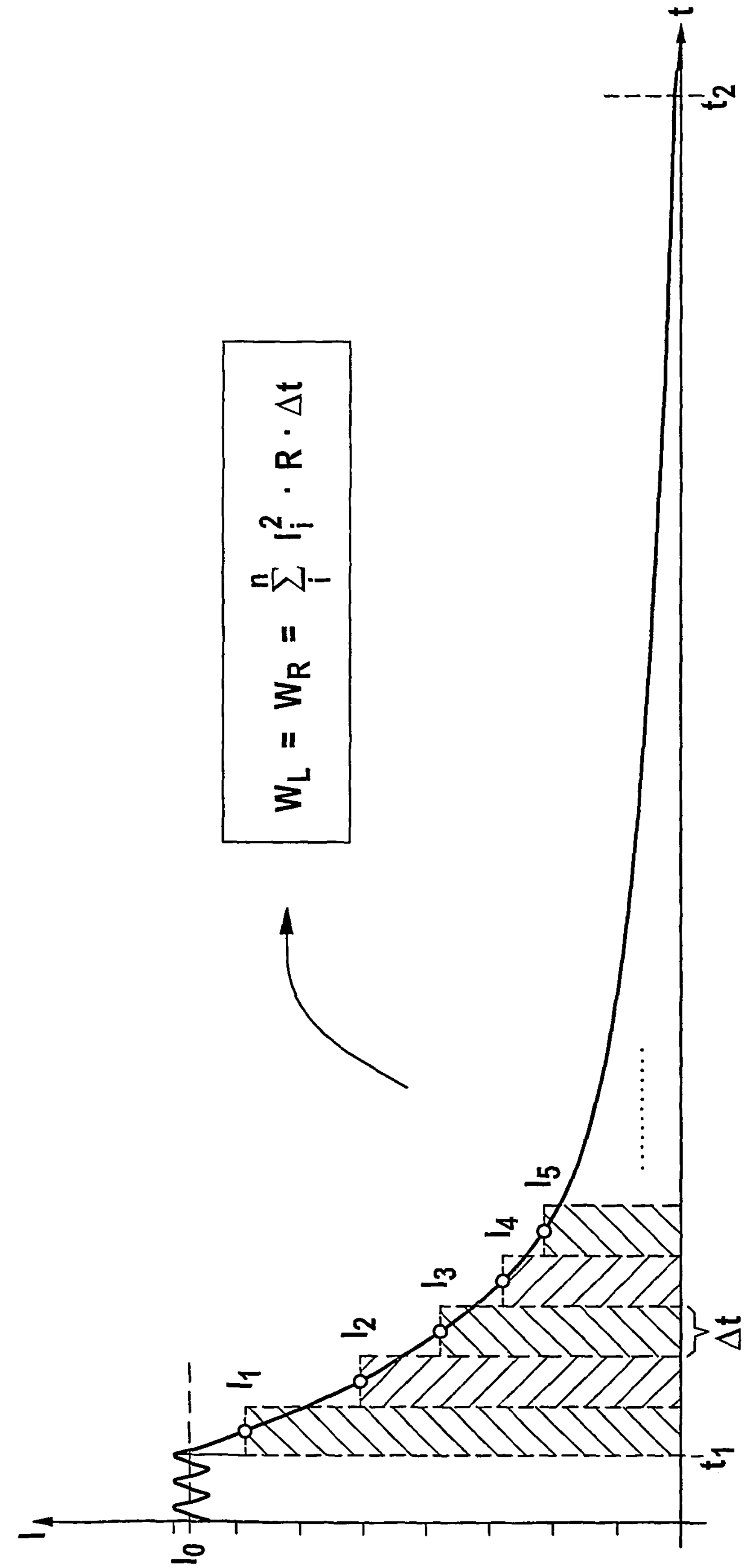
$W_L = W_R = \sum_i^n I_i^2 \cdot R \cdot \Delta t$
I
$I_0$
$I_1$
$I_2$
$I_3$
$I_4$
$I_5$
$\Delta t$
$t_1$
$t_2$
t

Fig. 6

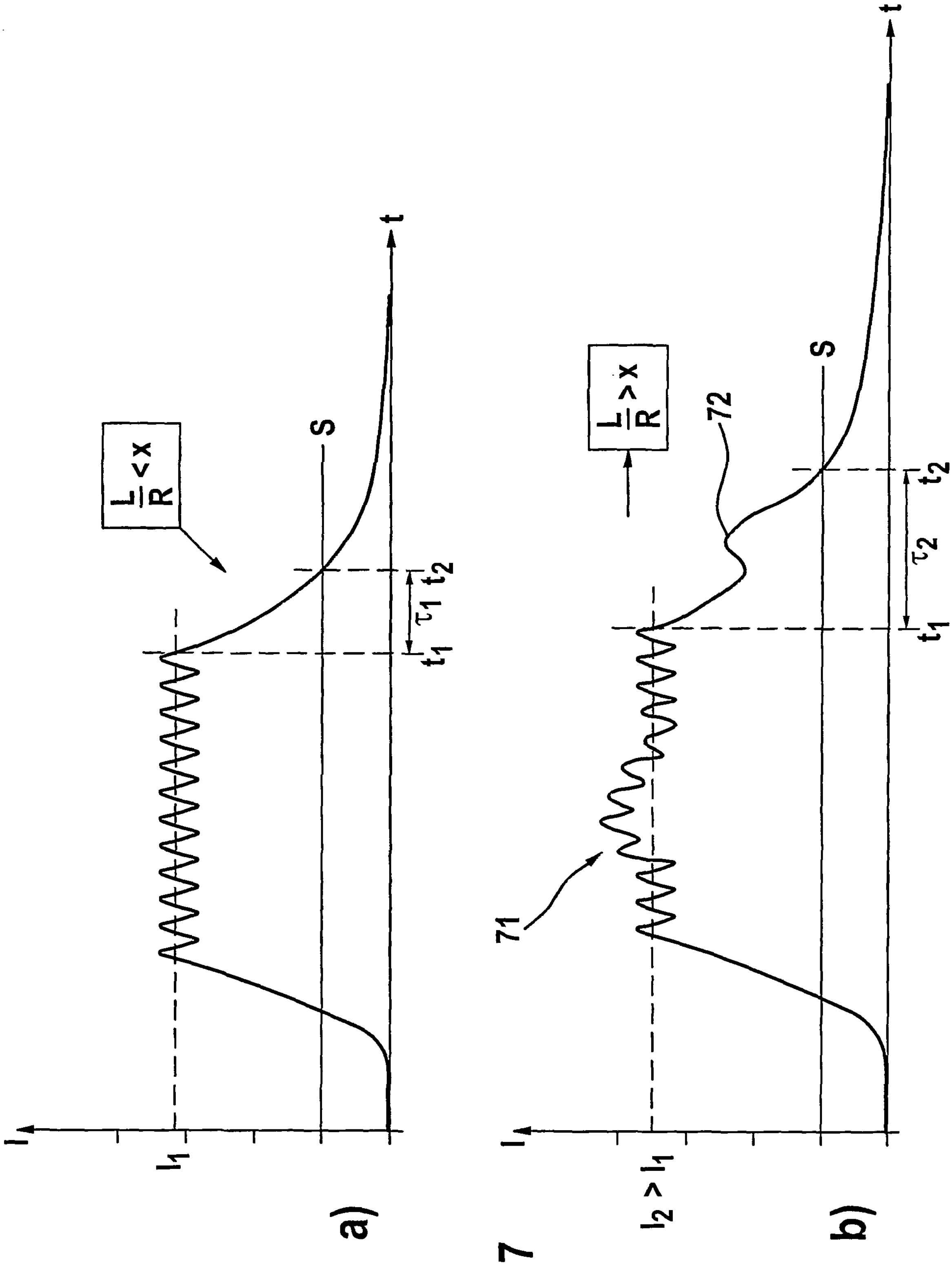


Fig. 7

Fig. 8

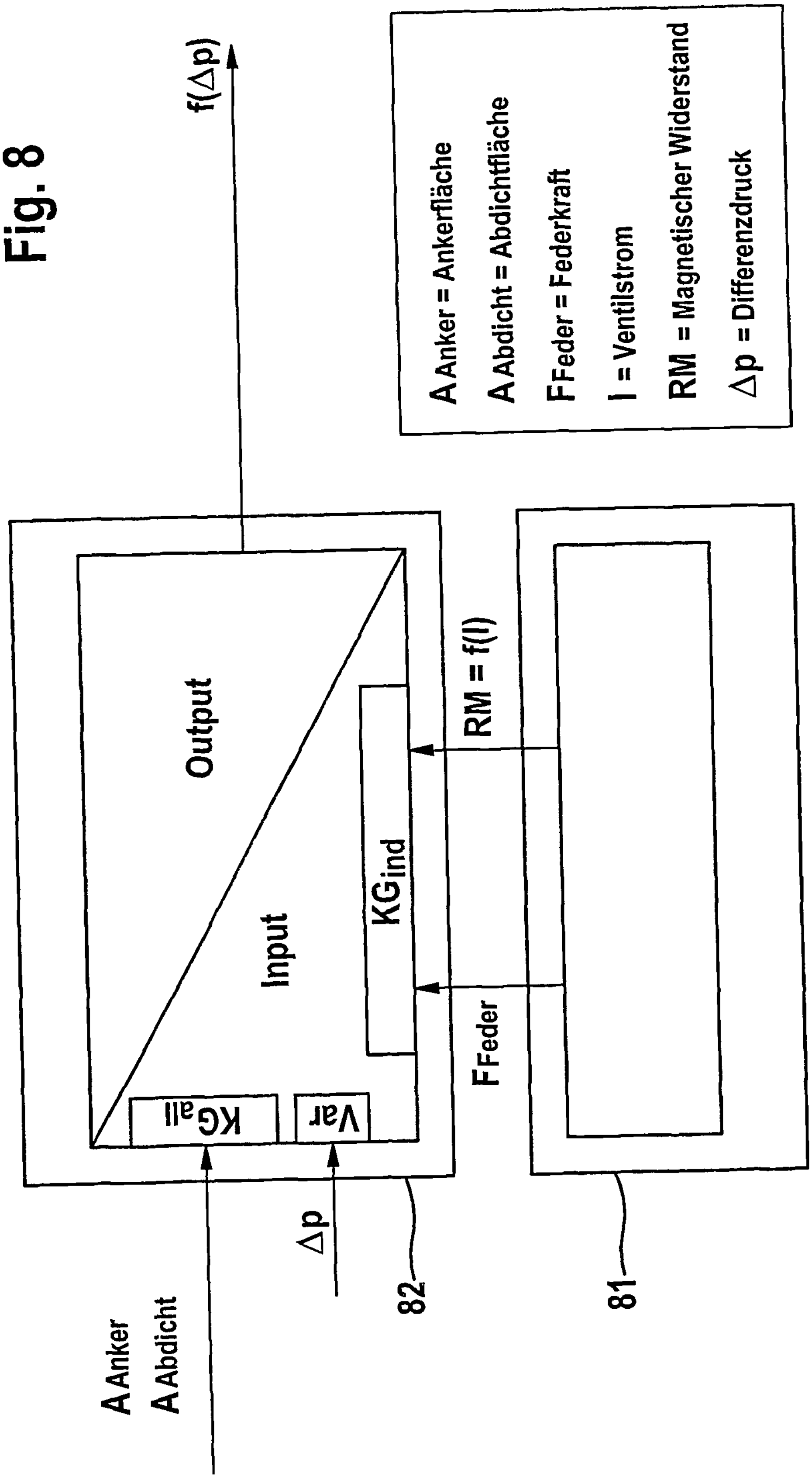

f(Δp)
Output
Input
KGind
KGall
Var
RM = f(I)
FFeder
Δp
AAnker
AAbdicht
82
81
AAnker = Ankerfläche
AAbdicht = Abdichtfläche
FFeder = Federkraft
I = Ventilstrom
RM = Magnetischer Widerstand
Δp = Differenzdruck

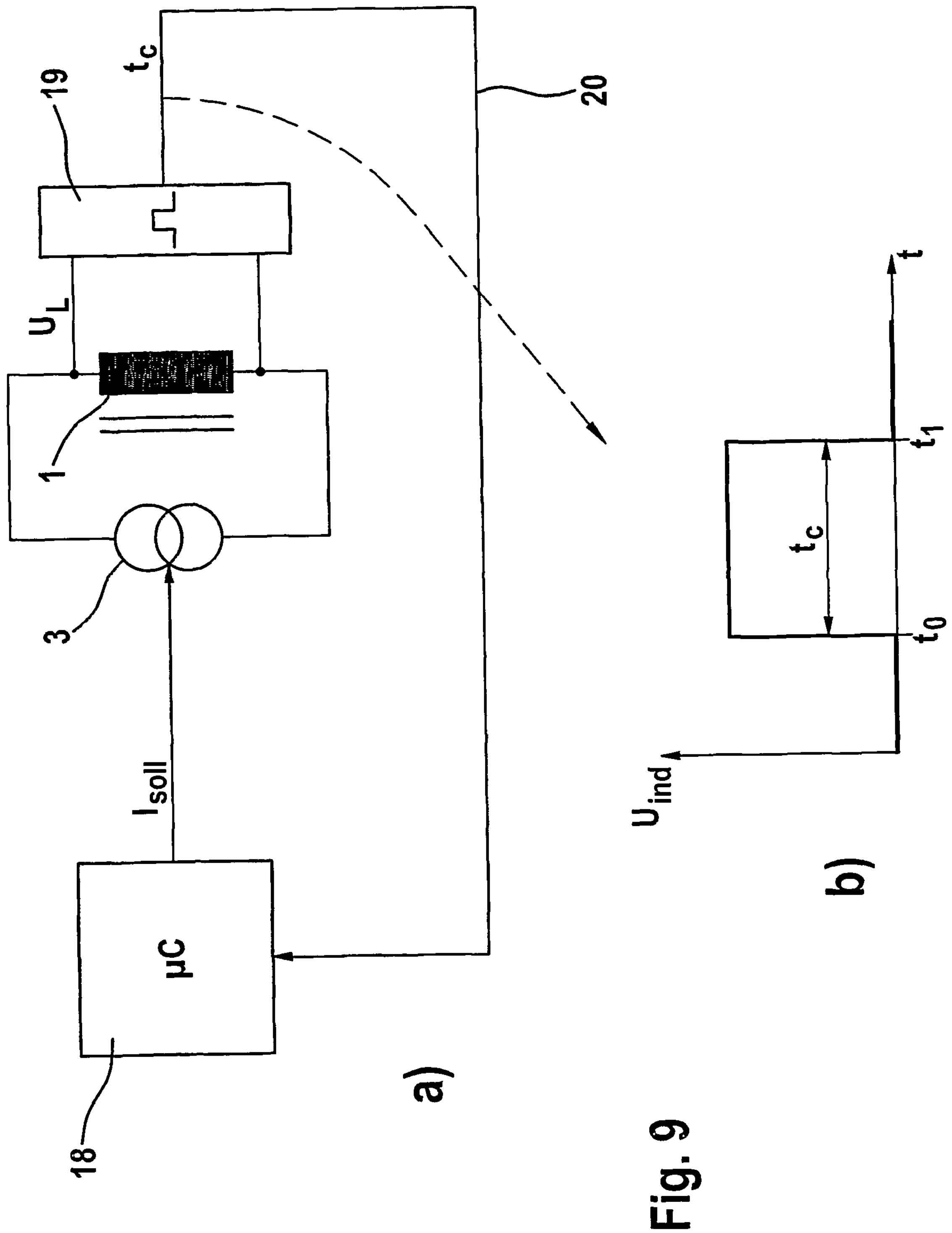


Fig. 9

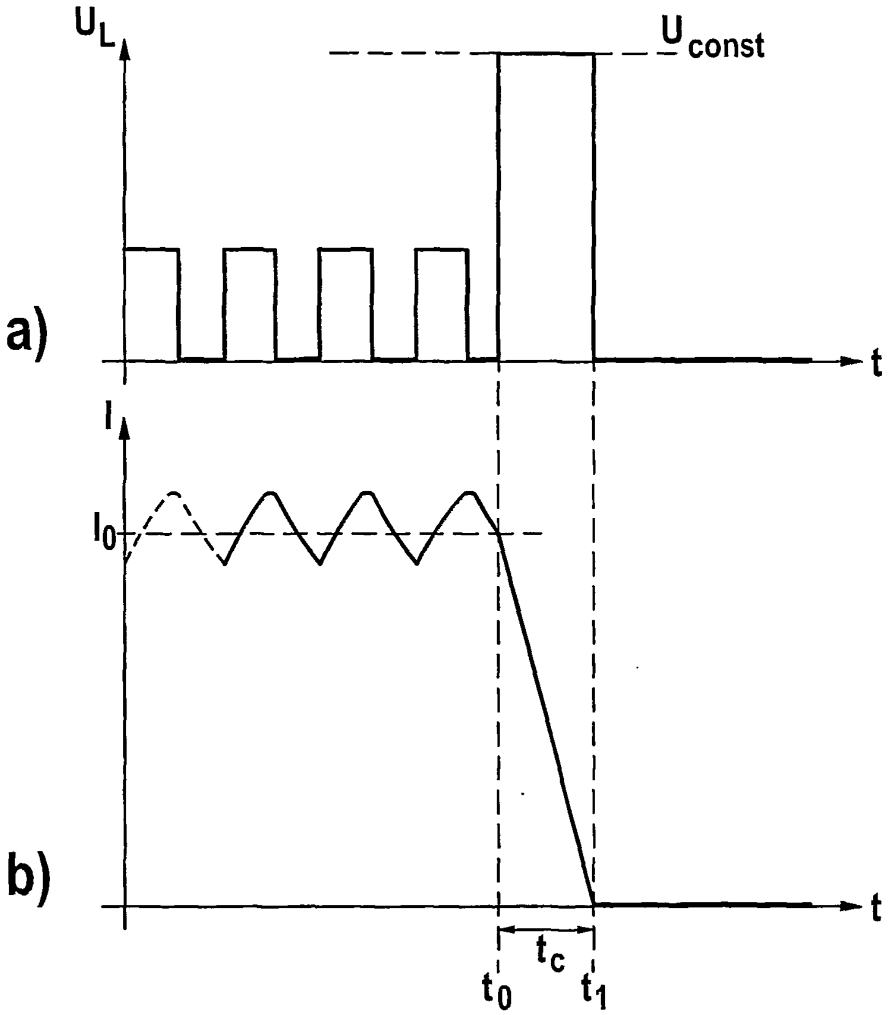
UL
Uconst
a)
t
I
I0
b)
t
tc
t0
t1

Fig. 10

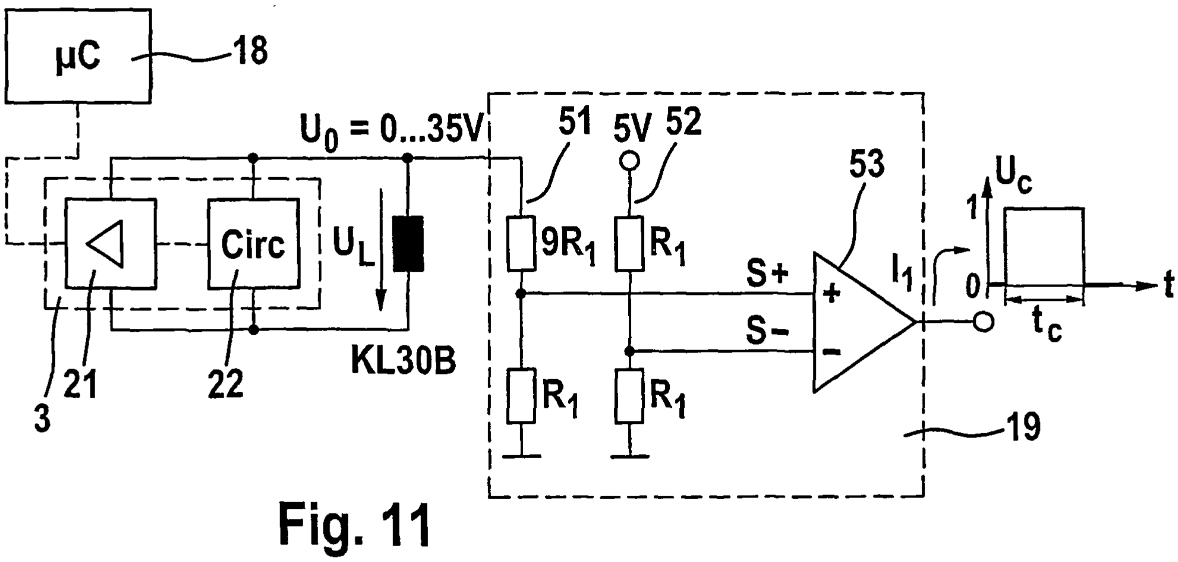
µC
18
U0 = 0...35V
51
5V
52
53
Circ
UL
9R1
R1
S+
S-
I1
Uc
1
0
t
tc
KL30B
21
22
3
R1
R1
19

Fig. 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10053606 A1
- DE 10053607 A1
- EP 0813481 B1
- WO 0198124 A1
- DE 10321783
- WO 03074338 A1
- DE 102004017239